(19) Europäisches Patentamt
European Patent Office
Office européen des brevets

(11) EP 2 666 892 A2

(12) **EUROPEAN PATENT APPLICATION**
published in accordance with Art. 153(4) EPC

(43) Date of publication:
**27.11.2013 Bulletin 2013/48**

(21) Application number: **12737017.9**

(22) Date of filing: **18.01.2012**

(51) Int Cl.:
***D01F 6/62*** *(2006.01)* ***D02G 3/02*** *(2006.01)*
***D03D 1/02*** *(2006.01)* ***D03D 15/00*** *(2006.01)*

(86) International application number:
**PCT/KR2012/000433**

(87) International publication number:
**WO 2012/099392 (26.07.2012 Gazette 2012/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2011 KR 20110005110**

(71) Applicant: **Kolon Industries, Inc.**
**Gwacheon-si, Gyeonggi-do 427-709 (KR)**

(72) Inventors:
- **KIM, Young-Jo**
**Gimpo-si**
**Gyeonggi-do 415-060 (KR)**
- **LEE, Sang-Mok**
**Gumi-si**
**Gyeongsangbuk-do 730-020 (KR)**
- **LEE, Young-Soo**
**Gumi-si**
**Gyeongsangbuk-do 730-030 (KR)**
- **KIM, Gi-Woong**
**Daegu 706-020 (KR)**

(74) Representative: **Ter Meer Steinmeister & Partner**
**Me/bk**
**Mauerkircherstrasse 45**
**81679 München (DE)**

(54) **POLYESTER FIBER AND POLYESTER FABRIC COMPRISING SAME**

(57) The present invention relates to a polyester yarn which can be used in a fabric for an airbag. More particularly, the present invention relates to a polyester yarn for an airbag having a modulus of 60 g/ d or less in the elongation range of 2.0-3.0%, a modulus of 45-70 g/ d in the elongation range of 9.0-11.0%, and a modulus of 60 g/ d or more in the elongation range of 12.0-14%, and a fabric for an airbag including the same. When the polyester yarn is used in the fabric for an airbag, it provides excellent packing property, excellent occupant-protection performance upon collision, and gas barrier effect, and also minimizes the impact applied to the occupant, thereby safely protecting the occupant.

**FIG. 3**

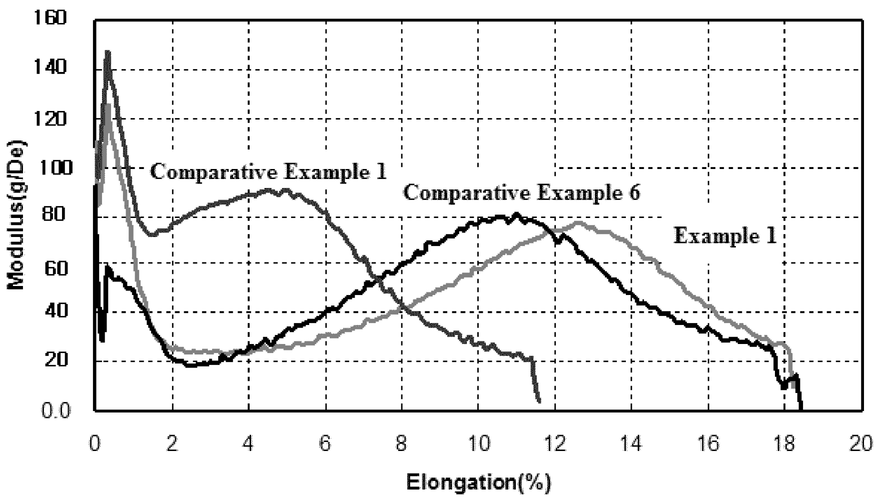


EP 2 666 892 A2

## Description

### FIELD OF THE INVENTION

The present invention relates to a polyester yarn which can be used in a fabric for an airbag. More particularly, the present invention relates to a polyester yarn having excellent packing property, flexibility, shape stability or the like, and a polyester fabric including the same.

### BACKGROUND OF THE INVENTION

Generally, an airbag is a device for protecting a driver and passengers, in which a crash impact is detected by an impact detecting sensor when driving vehicles collide head-on at a speed of about 40 km/ h or higher, and consequently, gunpowder explodes to supply gas into an airbag cushion to inflate the airbag. A general structure of an airbag system is depicted in FIG. 1.

As depicted in FIG. 1, the conventional airbag system includes: an inflator 121 that generates a gas by ignition of a detonator 122; an airbag module 100 that includes an airbag 124 that is expanded and unfolded toward a driver on the driver's seat by the generated gas, and is installed in a steering wheel 101; an impact sensor 130 that gives an impact signal when the vehicle has crashed; and an electronic control module 110 that ignites the detonator 122 of the inflator 121 according to the impact signal. In such airbag system, the impact sensor 130 detects the impact and sends the signal to the electronic control module 110 when the vehicle collides head-on. At this time, the electronic control module 110 that received the signal ignites the detonator 122 and a gas generator in the inflator 121 is combusted. The combusted gas generator rapidly generates the gas to expand the airbag 124. The expanded airbag 124 contacts the front upper body of the driver and partially absorbs the impact load caused by the collision, and when the driver's head and chest go forward according to the law of inertia and smash against the airbag 124, it further absorbs the shock toward the driver by rapidly discharging the gas from the airbag 124 through discharging holes formed on the airbag 124. Therefore, the airbag effectively absorbs the shock that is delivered to the driver at the time of a collision, and can reduce secondary injuries.

As disclosed above, an airbag used in a vehicle is prepared in a certain shape and is installed in the steering wheel, door roof rails, or side pillars of the vehicle in a folded form so as to minimize its volume, and it is expanded and unfolded when the inflator 121 operates.

Therefore, the airbag is required to effectively maintain the folding and packaging properties with a volume as small as possible, when it is installed in a vehicle, to prevent damage to and rupture of the airbag itself, to show excellent unfolding performance of the airbag cushion, and to minimize the impact provided to the occupant. To this end, it is very important that the fabric for an airbag has superior folding property or flexibility for reducing the shock to the occupant, in addition to excellent mechanical properties.

Previously, a polyamide fiber such as nylon 66 or the like has been used as the raw material of the yarn or the fabric for an airbag. However, nylon 66 has superior impact resistance but has drawbacks of being inferior to a polyester fiber in terms of moisture and heat resistance, light resistance, and shape stability, and being expensive.

Meanwhile, Japanese patent publication No. Hei 04-214437 suggested the use of a polyester fiber for reducing such defects. However, when the airbag was prepared by using the prior polyester yarn, it is difficult to put the airbag into a narrow space in an automobile because of high stiffness and low flexibility of the polyester fiber, and thus the folding property is reduced, and a considerable impact can be applied to the occupant upon unfolding of the airbag cushion. In addition, because polyester decomposition frequently occurs by moisture or heat, there is a limitation in maintaining sufficient mechanical properties and unfolding performance under the severe conditions of high temperature and high humidity. For these reasons, the polyester fiber has been hardly applied to commercial products.

Accordingly, the present inventors have solved the above problems of the polyester fiber to some degree, and developed a yarn that is improved to be applicable to the airbag, and this polyester yarn is disclosed in Korean Patent Publication No. 2010-0117022. This polyester yarn developed by the present inventors shows relatively excellent mechanical properties and improved flexibility, compared to those previously known, and thus shows folding and unfolding performances suitable for the airbag. Recently, there is a continuous need to improve performance of the airbag cushion for the occupant's safety, and furthermore, development of a yarn and a fabric for an airbag as an alternative to the expensive nylon 66 fiber has become an emerging issue in the related art. Thus, there is an urgent need to develop an airbag cushion having superior folding and unfolding performances.

### SUMMARY OF THE INVENTION

It is an object of the present invention is to provide a polyester yarn which has flexibility and mechanical properties optimized for an airbag and thus is allowed to provide an airbag cushion capable of showing more improved

folding and unfolding performances and minimizing the impact applied to the occupant upon unfolding.

It is another object of the present invention is to provide a polyester fabric for an airbag, including the polyester yarn.

The present invention provides a polyester yarn for an airbag having a modulus of 60 g/ d or less in the elongation range of 2.0-3.0%, a modulus of 45-70 g/ d in the elongation range of 9.0-11.0%, and a modulus of 60 g/ d or more in the elongation range of 12.0-14%.

Further, the present invention provides a polyester fabric for an airbag, including the polyester yarn.

## BRIEF DESCRIPTION OF THE DRAWINGS

FIG. 1 is a view of a general airbag system;
FIG. 2 is a schematic view showing a process for producing a polyester yarn according to an embodiment of the present invention; and
FIG. 3 is a graph showing the result of measuring the modulus according to the elongation with respect to the yarns of Example 1 and Comparative Examples 1 and 6.

## DETAILED DESCRIPTION OF THE EMBODIMENTS

Hereinafter, a polyester yarn and fabric for an airbag according to specific embodiments of the present invention will be described in more detail. However, these are set forth to illustrate the present invention, and the scope of the present invention is not limited thereto. It will be obvious to those skilled in the art that various modifications are possible within the scope of the present invention.

Additionally, as long as not particularly described in the entire specification, "includes" or "contains" means to include any component (or constituent) without particular limitation, and the addition of another component (or constituent) is not excluded.

A polyester fabric for an airbag may be produced by melt-spinning a polymer containing polyethylene terephthalate (hereinafter, referred to as "PET") to prepare an undrawn yarn, drawing the undrawn yarn to obtain a drawn yarn (e.g., "yarn"; hereinafter, "the drawn yarn" is referred to as "yarn", unless otherwise specified), and weaving the polyester yarn obtained through the process. Therefore, the characteristics of the polyester yarn are directly or indirectly reflected in the physical properties of a polyester fabric for an airbag.

Particularly, in order to apply the polyester fiber to the yarn for an airbag instead of the prior polyamide fiber such as nylon 66 or the like, it is necessary to overcome a reduction in the folding property due to high stiffness or low flexibility of the prior polyester yarns and high impact applied to the occupant upon unfolding of the airbag cushion. Further, a reduction in physical properties under severe conditions of high temperature or high humidity due to the specific low melt heat capacity of the polyester fiber, and a decline in unfolding performance thereby must be overcome.

More specifically, polyester has a higher stiffness and a more rigid structure than nylons in terms of molecular structure. Thus, when a yarn and a fabric including polyester are applied in the airbag, folding and packing properties of the airbag into a narrow space may be reduced, and a considerable impact may be applied to the occupant upon unfolding of the airbag cushion.

[General Formula 1]: Molecular structure of PET

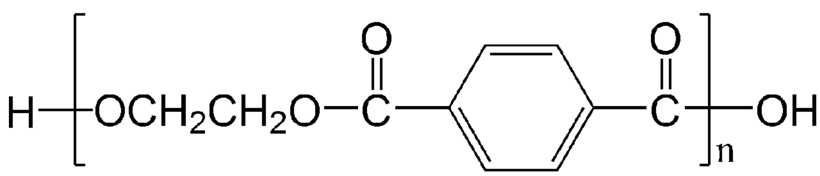

As shown in the PET molecular structure of General Formula 1, carboxyl end groups (hereinafter, referred to as "CEG") are included in the polyester molecular chain, and CEGs attack ester bonds under the severe conditions of high-temperature or high-humidity conditions to cut the chain, and it causes deterioration of the physical properties under the severe conditions.

For this reason, yarns and fabrics composed of nylon 6 or nylon 6,6 have been conventionally used for manufacturing the airbag cushion. However, nylon-based yarns also have a considerably high modulus and thus the impact

of the airbag causes injury to the occupant, when the airbag cushion is fully unfolded.

Considering these problems, the present inventors have studied, and as a result, they found that a polyester yarn and fabric having mechanical properties suitable for the airbag while showing excellent flexibility, low stiffness and an optimized modulus range can be provided through the after-mentioned optimization of the production process, thereby completing the present invention. When the yarn and the fabric for an airbag are used to provide the airbag cushion, it shows excellent folding and packing properties and greatly reduces the impact applied to the occupant, and reduces deterioration of the physical properties under the severe conditions, and shows excellent unfolding performance.

The polyester yarn of one embedment may have a modulus of 60 g/ d or less in the elongation range of 2.0-3.0%, a modulus of 45-70 g/ d in the elongation range of 9.0-11.0%, and a modulus of 60 g/ d or more in the elongation range of 12.0-14%. The polyester yarn may have a modulus of preferably 10-40 g/ d, and more preferably 15-30 g/ d in the elongation range of 2.0-3.0%, a modulus of preferably 45-70 g/ d, and more preferably 50-70 g/ d in the elongation range of 9.0-11.0%, and a modulus of preferably 60-100 g/ d, and more preferably 65-90 g/ d in the elongation range of 12.0-14%.

In the polyester yarn, the modulus ranges may be those measured under the typical tensile test conditions around room temperature, for example, at approximately 25°C, and the modulus may be defined as the slope of the tangent line at a point on the curve corresponding to each strain in the stress-strain curve obtained by a tensile test.

Further, in the polyester yarn of one embedment, the elongation ranges of 2-3%, 9.0-11.0%, and 12.0-14% reflect the characteristic ranges of the airbag cushion before unfolding (e.g., upon packing and storing), upon unfolding, and after unfolding, and the polyester yarn of one embodiment may have the optimized modulus ranges in these characteristic ranges. There have been no polyester yarn having the above mentioned modulus ranges in the characteristic ranges, and the present inventors found that the polyester yarn having the modulus ranges in these characteristic ranges can be produced by optimizing the after-mentioned production process of the polyester yarn, the intrinsic viscosity of the raw material polymer or the like.

As the polyester yarn has the optimized modulus ranges in these characteristic ranges, the fabric and cushion for an airbag obtained therefrom is able to exhibit excellent flexibility and low stiffness, and excellent unfolding performance, and to reduce the impact applied to the occupant upon unfolding, while showing excellent folding property when the airbag cushion is packed. Further, the fabric and the cushion obtained from the yarn are able to exhibit excellent mechanical properties and unfolding performance as an airbag, and thus exhibits excellent airbag performances without damage or rupture by an external impact after unfolding.

Hereinafter, a polyester yarn of one embodiment and a production method thereof will be described in more detail.

The polyester yarn preferably includes poly(ethylene terephthalate)(PET) as a main component. In this regard, PET may include other components because a variety of additives may be added during the production step of PET. In order to secure mechanical properties suitable for the yarn for the airbag, the yarn include at least 70 mol% or more, and more preferably 90 mol% or more of PET. Hereinafter, the term PET or PET yarn means 70 mol% or more of PET polymer as long as it is not particularly mentioned.

The polyester yarn of one embodiment shows the characteristics of having a modulus of 60 g/ d or less, preferably 10-40 g/ d, and more preferably 15-30 g/ d in the elongation range of 2.0-3.0%. As described above, the typical polyester has a high stiffness and a rigid structure in terms of molecular structure. Thus, the yarn and the fabric for an airbag obtained therefrom generally have reduced folding and packing properties. However, since the polyester yarn of one embodiment shows the proper modulus ranges in the elongation range of 2.0-3.0%, the airbag is able to show excellent flexibility and low stiffness, and excellent folding property when stored in a vehicle and excellent packing property in a narrow space.

If the modulus is too high in the elongation range, the stiffness of the polyester yarn and fabric is increased to reduce folding property of the airbag cushion, resulting in a difficulty in storage.

Hereinafter, the production method of the polyester yarn will be described in more detail. In the present invention, a yarn having a high molecular weight (viscosity) and excellent mechanical properties (high strength, etc.) can be produced by melt-spinning a high-viscosity polyester polymer at a low temperature. Therefore, it is unnecessary to apply a high draw ratio in a drawing process in order to achieve high strength of the yarn. Even though the drawing process is carried out at a low draw ratio, the polyester yarn having excellent mechanical properties can be obtained. As the drawing process is carried out at a low draw ratio, an increase in the orientation of the polyester molecular chain can be prevented, and thus the polyester yarn of one embodiment is able to show a lower modulus range, for example, a modulus of 60 g/ d or less in the low elongation range of 2.0-3.0%.

Further, the polyester yarn of one embodiment shows the characteristics of having a modulus of 45-70 g/ d and preferably a modulus of 50-70 g/ d in the elongation range of 9.0-11.0%. The elongation range of 9.0-11.0% may represent the characteristic range upon unfolding of the airbag cushion. As the modulus range satisfies the above range in this elongation range, the impact applied to the occupant can be reduced, and excellent unfolding performance of the airbag cushion can be achieved. If the modulus range is too low, the airbag may be damaged by the pressure upon unfolding of the airbag so as to deteriorate unfolding performance and mechanical properties. If the modulus range is

too high, stiffness of the fabric for an airbag is increased and it becomes rigid upon unfolding of the cushion, which may cause injury to the face and body of the occupant.

This modulus range in the elongation range of 9.0-11.0% can be achieved by optimizing a heat fixation temperature within a specific range, for example, a temperature of 230 to 250°C during the drawing process after preparation of the undrawn yarn while optimizing the polymer viscosity, the melt-spinning conditions and the drawing process conditions in the after-mentioned production method of the yarn. As the heat fixation temperature or the like is optimized, relaxation of the polyester molecular chain is induced, leading to a less tensioned structure. Therefore, the polyester yarn may have the modulus range of, for example, 45-70 g/ d in the elongation range of 9.0-11.0% which corresponds to the middle elongation range.

Furthermore, the polyester yarn of one embodiment shows the characteristics of having a modulus of 60 g/ d or more, preferably a modulus of 60-100 g/ d, and more preferably a modulus of 65-90 g/ d in the elongation range of 12.0-14.0%. The elongation range of 12.0-14.0% means the characteristic range after unfolding of the airbag cushion. As the modulus range in the characteristic range is optimized within the above range, the impact applied to the occupant can be reduced after unfolding of the airbag, and excellent unfolding performance of the airbag cushion can be achieved. If the modulus in the above elongation range is too low, it is difficult to endure further impact and maintain the shape for protecting the occupant, after unfolding of the airbag cushion. In contrast, the yarn of one embodiment maintains the proper modulus range to have a proper elasticity, and thus damage of the airbag cushion by further impact can be prevented after complete unfolding thereof.

In the present invention, the polyester undrawn and drawn yarns are prepared by performing the melt-spinning process at a low temperature using the high-viscosity polyester polymer. As a result, the high viscosity is maintained after the melt-spinning process, and therefore, a plurality of polyester polymers having a long molecular chain and a high molecular weight (viscosity) can be included in the yarn. Further, the polymers having long molecular chains are entangled to exhibit stress in the high elongation range near the breaking elongation, and therefore, the yarn is able to show higher modulus. As a result, the polyester yarn of one embodiment is able to show a relatively high modulus range of 60 g/ d or more in the elongation range of 12.0-14.0%, and show proper elasticity and excellent mechanical properties in the high elongation range.

The above-described polyester yarn of one embodiment may have a higher intrinsic viscosity of, for example, 0.8 dl/ g or more, or 0.8 dl/ g to 1.2 dl/ g, preferably 0.85 dl/ g to 1.15 dl/ g, and more preferably 0.90 dl/ g to 1.10 dl/ g than the previously known polyester yarn. Preferably, the intrinsic viscosity may be present in this range such that the polyester yarn is not thermally deformed during a coating process for forming the polyester yarn into an airbag.

Only when the intrinsic viscosity of the yarn is 0.8 dl/ g or more, a high-strength yarn can be obtained even at low draw ratio, thus satisfying the required high strength of a fabric for an airbag, and otherwise, the physical properties should be achieved at a high draw ratio. As such, when the high draw ratio is applied, the degree of orientation thereof increases such that the fiber may have a high modulus in the low elongation range, and thus it is difficult to achieve the above described physical properties of one embodiment. Further, when the viscosity of the yarn is more than 1.2 dl/ g, the tension increases during elongation, thereby causing process problems, and thus it is more preferred that the viscosity thereof is 1.2 dl/ g or less. When the polyester yarn of one embodiment maintains such a high intrinsic viscosity, it is provided with low stiffness at a low draw ratio and also exhibits excellent mechanical properties such as sufficient impact resistance and toughness for an airbag.

Further, the polyester yarn of one embodiment, which is manufactured under the following melt-spinning and drawing conditions, may include a much lower amount of a carboxyl end group (CEG) than the previously known polyester yarns. For example, the polyester yarn may include CEG in an amount of 50 meq/ kg or less, preferably 40 meq/ kg or less, and more preferably 30 meq/ kg or less. The carboxyl end groups (CEG) in the polyester molecular chain attack ester bonds under high-temperature and high-humidity conditions to cut the molecular chain, and it causes deterioration of the physical properties after aging. In particular, if the CEG content is more than 50 meq/ kg, an ester bond is cleaved by CEG under a condition of high humidity to cause a reduction in the physical properties of the fabric, when applied to an airbag. Thus, it is preferable that the CEG content is 50 meq/ kg or less.

The polyester yarn of one embodiment may have a tenacity of 6.5 g/ d or more, or 6.5 g/ d to 11.0 g/ d, and preferably 7.5 g/ d or more, or 7.5 g/ d to 10.0 g/ d, and a breaking elongation of 13% or more, or 13% to 35 %, and preferably 15% or more, or 15% to 25%. Further, the yarn may have a dry shirinkage ratio range of 3.0% to 12% or less, and preferably 3.5% to 12.0%, and toughness of 30x10-1 g/ d or more, or 30x10-1 g/ d to 46x10-1 g/ d, preferably 31×10-1 g/ d or more, or 31x10-1 g/ d to 44x10-1 g/ d. As described above, by optimizing the modulus ranges according to the specific intrinsic viscosity and elongation ranges, the polyester yarn of one embodiment shows excellent mechanical properties, and superior folding property, packing property and unfolding performance, and is allowed to provide an airbag cushion capable of greatly reducing the impact applied to the occupant when it is unfolded. Such excellent physical properties of the polyester yarn can be reflected in the tenacity, breaking elongation, shirinkage rate and toughness ranges.

Meanwhile, in order to prevent the fabric for an airbag from being deformed during a heat treatment process

for coating process or the like, the polyester yarn of one embodiment may have a crystallinity of 40% to 55%, preferably 41% to 52% and more preferably 41% to 50%. When the polyester yarn is applied to a fabric for an airbag, the crystallinity of the polyester yarn must be 40% or more to maintain the thermal shape stability of the fabric. When the crystallinity thereof is more than 55%, there is a problem in that the impact absorbing performance of the airbag cushion is deteriorated because the noncrystalline region of the polyester yarn is decreased.

Further, the single yarn fineness of the polyester yarn may be 0.5 to 20 denier, and preferably 2.0 to 10.5 denier. The polyester yarn must maintain low fineness and high strength in terms of packing property so that the polyester yarn is effectively used in the fabric for an airbag. Accordingly, the applicable total fineness of the yarn may be 200 to 1,000 denier, preferably 220 to 840 denier, and more preferably 250 to 600 denier. Furthermore, it is preferable that the number of filaments of the yarn may be 50 to 240, preferably 55 to 220, and more preferably 60 to 200, because a greater number of filaments of the yarn can give a softer touch but too many filaments are not good in terms of spinnability.

Meanwhile, the polyester yarn of one embodiment of the present invention, as described above, may be produced by melt-spinning polyester polymers, for example, PET chips to prepare an undrawn yarn, and drawing the undrawn yarn. As described above, a polyester yarn having the above-mentioned physical properties can be produced by directly and indirectly reflecting the specific conditions or procedures of each step in the physical properties of the polyester yarn.

In particular, it was revealed that the polyester yarn for an airbag satisfying the modulus ranges in the above described specific elongation ranges can be produced by optimizing the conditions of each process for producing the yarn. More particularly, the above described yarn of one embodiment can be produced by optimization of the raw material polymer (e.g., optimization of intrinsic viscosity or the like), determination of proper spinning temperature, determination of optimal drawing temperature and draw ratio in the drawing process, or change of other cooling conditions and heat fixation temperature.

Hereinafter, a method of producing a polyester yarn will be described in more detail with respect to each step.

The method of producing the polyester yarn for an airbag may include the steps of melt-spinning a polyester polymer having an intrinsic viscosity of 0.85 dl/ g or more at 270 to 300°C to prepare an undrawn polyester yarn; and drawing the undrawn polyester yarn.

First, the melt-spinning and drawing processes according to the present invention will be briefly described with reference to the attached drawings such that it can be easily carried out by those skilled in the art.

FIG. 2 is a schematic view showing a process of producing a polyester yarn, including the steps of melt-spinning and drawing, according to an embodiment of the present invention. As shown in FIG. 2, in the method of producing a polyester yarn for an airbag, a polyester polymer obtained through a predetermined process is melted, the molten polymer spun by a spinning nozzle is cooled by quenching air, a spinning oil is provided to the undrawn yarn using a roller (or oil jet) 120, and then the spinning oil provided to the undrawn yarn is uniformly dispersed on the surface of the yarn at a predetermined pressure using a pre-interlacer 130. Subsequently, the undrawn yarn is drawn by multi-step drawing rollers 141 to 146, the yarn is intermingled at a predetermined pressure by a second interlacer 150, and then the intermingled yarn is rolled by a winding roller 160, thus producing a yarn.

Meanwhile, in the production method of the present invention, first, a high-viscosity polyester polymer can be prepared and used. Particularly, in the production process of the polyester using dicarboxylic acid and glycol, the polyester polymer can be prepared by further adding glycol after the polycondensation reaction. The prepared polyester polymer has a high intrinsic viscosity and a low content of carboxyl end group (CEG). When the polyester polymer is processed to a polyester yarn, it is able to maintain excellent mechanical properties, air-leakage protection, air-tightness or the like after aging under severe conditions of high temperature and high humidity. Therefore, the yarn can be effectively applied to the fabric for an airbag.

More particularly, the polyester polymer may be produced by the process including the steps of a) carrying out an esterification reaction of dicarboxylic acid and glycol, and b) carrying out a polycondensation reaction of the oligomers produced from the esterification reaction, and glycol may be further added after the polycondensation reaction.

In this regard, the dicarboxylic acid may be one or more selected from the group consisting of an aromatic dicarboxylic acid having 6 to 24 carbon atoms, a cycloaliphatic dicarboxylic acid having 6 to 24 carbon atoms, an alkane dicarboxylic acid having 2 to 8 carbon atoms, and ester-forming derivatives thereof. More particularly, the dicarboxylic acid or the ester-forming derivative may be aromatic dicarboxylic acid having 6-24 carbon atoms such as terephthalic acid, isophthalic acid, biphenyl dicarboxylic acid, 1,4-naphthalene dicarboxylic acid, 1,5-naphthalene dicarboxylic acid or the like, and ester-forming derivatives thereof, cycloaliphatic dicarboxylic acid having 6-24 carbon atoms such as 1,4-cyclohexane dicarboxylic acid or the like, and alkane dicarboxylic acid having 2 to 6 carbon atoms or the like.

Among them, terephthalic acid is preferably used, considering economics and the physical properties of the complete product. Particularly, the dicarboxylic acid including 70 mol% or more of terephthalic acid is preferably used, when one or more compounds are used as the dicarboxylic acid.

Furthermore, the glycol usable in the above production method may be one or more selected from the group consisting of alkane diol having 2-8 carbon atoms, cycloaliphatic diol having 6-24 carbon atoms, aromatic diol having

6-24 carbon atoms, and an ethylene oxide or propylene oxide adduct thereof. More particularly, the glycol may be alkane diol having 2-8 carbon atoms such as ethylene glycol, 1,2-propane diol, 1,3-propane diol, 1,3-butane diol, 1,4-butane diol, 1,5-pentane diol, 1,6-hexane diol or the like, cycloaliphatic diol having 6-24 carbon atoms such as 1,4-cyclohexane diol, 1,4-cyclohexane dimethanol or the like, aromatic diol having 6-24 carbon atoms such as bisphenol A, bisphenol S or the like, and an ethylene oxide or propylene oxide adduct of the aromatic diol or the like.

As described above, the method of producing the polyester polymer including esterification of dicarboxylic acid and glycol can be called TPA (Terephthalic Acid) method. A general TPA method is a direct reaction of the dicarboxylic acid and the glycol, and is a self acid-catalyzed reaction without using other catalysts in the esterification reaction. For example, poly(ethylene terephthalate) (PET) may be directly prepared by the esterification reaction of terephthalic acid and ethylene glycol, as shown in the following Reaction Scheme 1.

[Reaction Scheme 1]

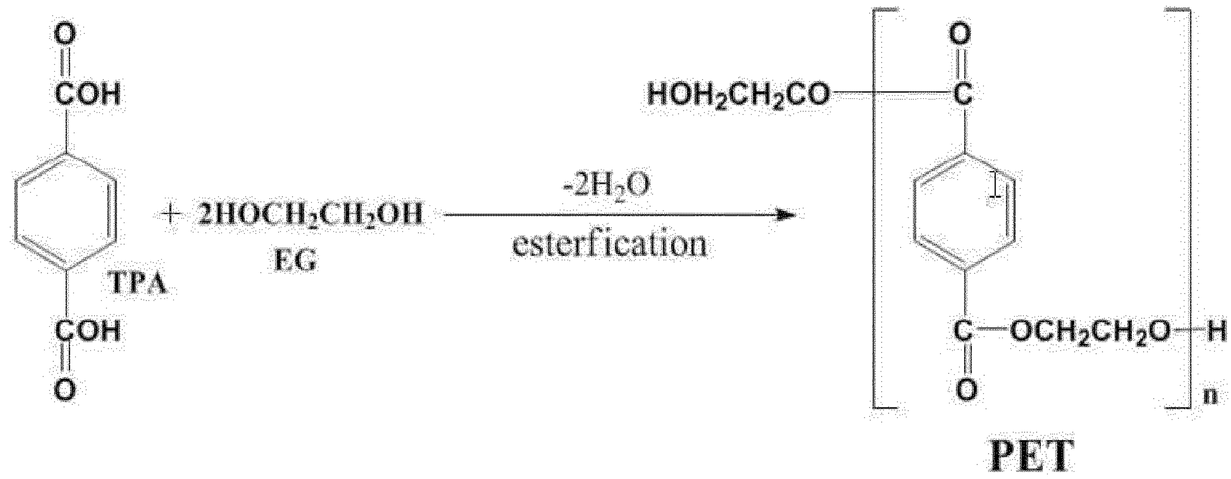


TPA

EG

PET

In the TPA reaction, it is needed to maintain a high temperature because of the insolubility and low reactivity of the dicarboxylic acid. The oligomer prepared by the above method can be polymerized into a polymer having a specific viscosity by carrying out a polycondensation reaction at a high temperature while adding a catalyst under a high vacuum condition. The prepared polymer is discharged through a nozzle by using a gear pump or a high pressure inert gas ($N_2$). The discharged polymer is solidified in cooling water and cut into an adequate size.

When the polyester polymer is produced by the conventional TPA method, the final polyester polymer prepared has plenty of carboxyl end groups, because the esterification and polycondensation reactions at a high temperature cause thermal degradation and generate carboxyl end groups and the dicarboxylic acid having carboxyl end groups is used as the raw material. Furthermore, when the polyester yarn having plenty of carboxyl end groups is applied to the fabric for an airbag, the carboxyl end group that exists as an acid under the high temperature and high humidity conditions causes the scission of the molecular chain and deteriorates the properties of the fabric, as disclosed above.

In the present invention, however, because glycol is further added and the reduced pressure reaction is carried out after the polycondensation reaction of dicarboxylic acid and glycol in the preparation of the polyester polymer, the content of carboxyl end groups can be minimized, and highly reactive hydroxy end groups can be produced through the reaction, and the molecular weight of the polymer can be also increased.

However, the esterification reaction of dicarboxylic acid and glycol and the polycondensation reaction, excluding the step of further adding glycol, may be carried out according to the conventional method known as the TPA method, and is not particularly limited to special processing conditions. According to one preferred embodiment, however, the mole ratio of dicarboxylic acid and glycol in step a) may be 1:1 to 1:1.5, preferably 1:1.1 to 1:1.45, and more preferably 1:1.2 to 1:1.4. Preferably, the mole ratio of the reactants is maintained in the above range in terms of improvement of the physical properties and productivity of the polymer.

The esterification reaction of step a) may be carried out at a temperature of 230 to 300 °C and preferably 270 to 295 °C, and the reaction time may be 2 to 7 hours, and preferably 3 to 5 hours. At this time, the reaction time and the reaction temperature may be controlled in terms of improvement of the physical properties and productivity of the polymer.

Furthermore, the polycondensation reaction of step b) may be carried out at a temperature of 280 to 310 °C, and preferably 290 to 307 °C under a pressure of 0 to 10 Torr, and preferably 0 to 5 Torr. At this time, the reaction time may be 1 to 5, hours, and preferably 2 to 4 hours. The reaction time and the reaction temperature may be controlled in

terms of improvement of the physical properties and productivity of the polymer.

A step of solid state polymerization of the produced polyester polymer may be further included, after the reduced pressure reaction of step b). In this regard, the solid state polymerization reaction may be carried out at a temperature of 220 to 260 °C, and preferably 230 to 250 °C, and at a pressure of 0 to 10 Torr, and preferably 1.0 Torr or lower. The reaction time may be 10 to 40 hours, and preferably within 30 hours. The reaction time and the reaction temperature may be controlled in terms of improvement of final viscosity and spinnability.

The polyester polymer produced by further carrying out the solid state polymerization may have the intrinsic viscosity of 0.7 dl/ g or more, or 0.7 to 2.0 dl/ g, preferably 0.85 dl/ g or more, or 0.85 to 2.0 dl/ g, and more preferably 0.90 dl/ g or more, or 0.90 dl/ g to 2.0 dl/ g, which is preferable in terms of improvement of the physical properties and the spinnability of the yarn. When the intrinsic viscosity of the chip is 0.7 dl/ g or more, the yarn having the preferred characteristics of high strength and high elongation can be produced. When the intrinsic viscosity of the chip is 2.0 dl/ g or less, the scission of the molecular chain due to the increasing melting temperature of the chip and the pressure increase in the spinning pack can be prevented.

In order to produce the polyester yarn having high strength and high elongation, in the process of preparing an undrawn yarn, it is necessary to use a high-viscosity polyester polymer, for example, a polyester polymer having an intrinsic viscosity of 0.85 dl/ g or more and to maintain such a high viscosity as much as possible during the melting spinning and drawing processes. By melt-spinning and drawing the high-viscosity polyester polymer at a low draw ratio, the yarn showing high strength and high elongation can be produced, and the polyester yarn having the above described modulus range of one embodiment can be also obtained. Further, in order to prevent the scission of the molecular chain due to the increasing melting temperature of the polyester polymer and the pressure increase due to the discharged amount from the spinning pack, it is more preferred that a polyester polymer having an intrinsic viscosity of 2.0 dl/ g or less is used.

Further, in order to maintain excellent physical properties even under conditions of high temperature and high humidity when the fabric produced from the polyester yarn is applied to an airbag, it is preferred that the CEG content in the molecule of the polyester polymer is 30 meq/ kg or less. Here, when the CEG content of the polyester polymer is maintained in a low range even after melt-spinning and drawing processes, the finally produced polyester yarn can preferably exhibit excellent physical properties such as high strength, excellent shape stability and mechanical properties under severe conditions. In this aspect, when the CEG content of the polyester polymer is more than 30 meq/ kg, the CEG content in the molecule of the polyester yarn finally produced by melt-spinning and drawing processes is excessively increased to such a degree of more than 30 to 50 meq/ kg, and an ester bond is cut by CEG under a condition of high humidity, thereby causing deterioration in the physical properties of the yarn itself and the fabric made therefrom.

Preferably, the polyester polymer includes poly(ethylene terephthalate)(PET) as a main component, and may include preferably 70 mol% or more, and more preferably 90 mol% or more thereof in order to secure mechanical properties as the yarn for the airbag.

Meanwhile, in the method for producing the polyester yarn of the present invention, the polyester polymer having the above described characteristics is obtained, and then melt-spun to prepare an undrawn polyester yarn.

In this case, in order to obtain an undrawn polyester yarn satisfying the above described characteristics of one embodiment, the melt-spinning process may be preferably performed at low temperature such that the thermal decomposition of the polyester polymer is minimized. Particularly, in order to maintain high intrinsic viscosity and CEG content of the polyester polymer as much as possible and to minimize the deterioration in physical properties upon production of the yarn, the spinning process may be performed at a low temperature, for example, 270 to 300 °C, preferably 280 to 298 °C, and more preferably 282 to 298 °C. Here, spinning temperature designates the extruder's temperature. When the melt-spinning process is performed at higher than 300 °C, a large amount of the polyester polymer is thermally decomposed, and thus the intrinsic viscosity thereof becomes low, resulting in an increase in the CET content thereof. Undesirably, the physical properties of the yarn can be deteriorated by the surface damage of the yarn. In contrast, when the melt-spinning process is performed at lower than 270 °C, it is difficult to melt the polyester polymer, and the spinnability may be deteriorated due to N/ Z surface cooling. Therefore, it is preferred that the melt-spinning process is performed in the above temperature range.

From the test results, it was found that, when the melt-spinning process of the polyester polymer is performed at such a low temperature, the decomposition of the polyester polymer is minimized to maintain high viscosity and high molecular weight, and thus a high-strength polyester yarn can be obtained in a subsequent drawing process without applying a high draw ratio, and therefore, the modulus of the yarn can be effectively lowered by producing the high-strength yarn through the low drawing process. Consequently, a polyester yarn satisfying the characteristics such as the modulus range of one embodiment can be produced.

Further, in the melt-spinning process, the melt-spinning rate of the polyester polymer can be adjusted, for example, as low as 300 to 1,000 m/ min, and preferably 350 to 700 m/ min in order to minimize spinning tension, in terms of minimizing the decomposition of the polyester polymer. As such, the process of melt-spinning the polyester polymer is selectively performed under a low spinning tension and a low spinning rate, so that the decomposition of the

polyester polymer can be further minimized.

Meanwhile, the undrawn yarn obtained by such a melt-spinning process may have an intrinsic viscosity of 0.8 dl/ g or more, or 0.8 to 1.2 dl/ g, preferably 0.85 dl/ g or more, or 0.85 to 1.15 dl/ g, and more preferably 0.90 dl/ g or more, or 0.90 to 1.10 dl/ g. Further, the CEG content in the molecule of the undrawn yarn obtained by the low-temperature spinning may be 50 meq/ kg or less, preferably 40 meq/ kg or less, and more preferably 30 meq/ kg or less. The CEG content in the molecule of the undrawn yarn can be maintained at the same level as that in the molecule of a drawn yarn obtained by performing a subsequent drawing process, that is, that in the molecule of a polyester yarn.

Particularly, as described above, when the thermal decomposition of the polyester polymer is suppressed as much as possible by melt-spinning the polyester polymer having high viscosity and low CEG content under the condition of low temperature, the difference in intrinsic viscosity between the polyester polymer and the polyester yarn and the difference in CEG content therebetween can be minimized. For example, the difference in intrinsic viscosity between the polyester polymer and the polyester yarn may be 0.5 dl/ g or less, or 0 to 0.5 dl/ g, and preferably 0.4 dl/ g or less, or 0.1 to 0.4 dl/ g. Further, the difference in the CEG content in the molecule between the polyester polymer and the polyester yarn may be 20 meq/ kg or less, or 0 to 20 meq/ kg, and preferably 15 meq/ kg or less, or 3 to 15 meq/ kg.

According to the above described production method, when the decrease in intrinsic viscosity of the polyester polymer and the increase in CEG content thereof are suppressed to the highest degree, excellent mechanical properties of the polyester yarn can be maintained, and simultaneously high elongation thereof can be secured, thereby producing a high-strength and high-elongation yarn suitable for a fabric for an airbag.

It is preferred that the polyester polymer, for example, PET chip is spun by a spinning nozzle designed such that the monofilament fineness is 0.5 to 20 denier, and preferably 1 to 15 denier. That is, it is preferred that the monofilament fineness must be 1.5 denier or more in order to reduce the possibility of a monofilament being cut during spinning and the possibility of a monofilament being cut by interference during cooling, and that the monofilament fineness must be 15 denier or less in order to increase cooling efficiency.

Further, after the polyester polymer is melt-spun, a cooling process is performed to prepare an undrawn polyester yarn. The cooling process may be preferably performed by applying cooling air at 15 to 60 °C, and the flow rate of the cooling air may be preferably adjusted to 0.4 to 1.5 m/ s at each cooling air temperature. By this means, an undrawn polyester yarn having physical properties according to an embodiment of the present invention can be more easily prepared.

Meanwhile, after an undrawn polyester yarn is prepared by the spinning step, the prepared undrawn yarn is drawn to produce a drawn yarn. In this case, the drawing process may be performed under a condition of a draw ratio of 5.0 to 6.0, and preferably 5.0 to 5.8. The undrawn polyester yarn is present in a state in which the high intrinsic viscosity and low initial modulus in the low elongation range are maintained and the CEG content in the molecule thereof is minimized by optimization of melt-spinning process. Therefore, when the drawing process is performed at a high draw ratio of more than 6.0, the undrawn polyester yarn is excessively drawn, so that the produced drawn yarn may be cut or mowed and the modulus range may not satisfy the characteristics of one embodiment because of high fiber orientation. Consequently, the fabric for an airbag produced from the drawn yarn may have reduced flexibility and folding or packing property, and thus an impact may be applied to the occupant upon unfolding of the airbag.

Conversely, when the drawing process is performed at a relatively low draw ratio, the strength of the produced polyester yarn may partially decrease due to low fiber orientation. However, in terms of physical properties, when the drawing process is performed at a draw ratio of 5.0 or more, it is possible to produce a high-strength and low-modulus polyester yarn suitable for being applied to a fabric for an airbag. Therefore, it is preferred that the drawing process is performed at a draw ratio of 5.0 to 6.0.

According to another proper embodiment of the present invention, the method may include the drawing, thermally fixing, relaxing, and winding processes through multi-step godet rollers from the melt-spinning process of the high viscosity polyester polymer chip to the winding process by the winder, in order to produce the polyester yarn satisfying high strength and low shirinkage and having low modulus by direct spinning and drawing processes.

The drawing process may be performed after passing the undrawn polyester yarn through a godet roller with an oil pickup amount of 0.2% to 2.0%. In the relaxation process, the relaxation ratio may be preferably 1% to 8%. When the relaxation rate thereof is less than 1%, it is difficult to achieve the shirinkage rate and to produce a high-elongation fabric because high fiber orientation is formed, like in the case of a high draw ratio condition. Further, when the relaxation rate thereof is more than 8%, it is difficult to secure workability because the undrawn polyester yarn severely trembles on a godet roller.

Further, in the drawing process, a heat fixation process of heat-treating the undrawn yarn at a temperature of 230 to 250 °C may be additionally performed. Preferably, for the proper drawing process, heat treatment may be performed at a temperature of 230 to 250 °C, and more preferably 230 to 245 °C. Here, when the temperature is lower than 230°C, thermal effects are insufficient, and the relaxation efficiency becomes low, and thus it is difficult to achieve a high elongation and to produce the yarn satisfying the physical properties according to one embodiment of the present invention. Conversely, when the temperature is higher than 250 °C, the strength of the yarn is deteriorated by the thermal

decomposition and tar is formed on a roller, thus deteriorating workability. In this case, the winding speed may be 2,000 to 4,000 m/ min, and preferably 2,500 to 3,700 m/ min.

In the present invention, matters other than the above-mentioned contents are not particularly limited because they can be added or omitted according to circumstances.

## EFFECTS OF THE INVENTION

According to the present invention, there is provided a polyester yarn having the optimal modulus range in the specific elongation range (e.g., a low modulus range in a low elongation range, and a relatively high modulus range in a high elongation range) and the characteristics of high strength and high elongation, and a production method thereof. The polyester yarn can be used for providing a fabric for an airbag that has excellent mechanical properties and flexibility and fold property and excellent occupant protection performance at the time of collision. This fabric for an airbag is able to obtain excellent shape stability, mechanical properties, and air blocking effects, and also to secure excellent folding property and flexibility, and to minimize the impact applied to the occupant and damages from the airbag upon unfolding of the airbag, thereby protecting the occupant safely.

Therefore, the polyester yarn of the present invention and the polyester fabric produced therefrom can be very preferably used to manufacture an airbag for a vehicle.

## BEST MODE FOR INVENTION

Hereinafter, the preferred Examples are provided for better understanding of the present invention. However, the following Examples are for illustrative purposes only, and the present invention is not intended to be limited by the following Examples.

### Examples 1-5

According to the processing conditions shown in the following Table 1, esterification reaction of terephthalic acid and ethylene glycol was carried out, polycondensation reaction of the prepared oligomers was carried out, and then a small amount of ethylene glycol was further added so as to prepare polymers.

Further, in order to increase the specific surface area, the polyester polymer (raw chip) prepared by the polycondensation reaction was cut into a size of 2.0 g/ 100ea, and then solid state polymerization reaction was carried out at a temperature range of 220-245 °C so as to prepare the SSP polyester chips having the intrinsic viscosity (IV) of 0.9-2.0 dl/ g.

The SSP polyester chips, namely, PET polymers were melt-spun and cooled under the process conditions as shown in the following Table 1, so as to prepare an undrawn polyester yarn, and then the undrawn yarn was drawn at a predetermined draw ratio and heat-treated to produce a polyester yarn. In this case, the mole ratio of glycol/ dicarboxylic acid, the conditions of the esterification reaction, the polycondensation reaction, and the solid state polymerization reaction, the intrinsic viscosity of PET polymer and the DEG/ CEG contents in the molecule, the spinning temperature of the melt-spinning process, the draw ratio, the heat-treating temperature or the like are given in Table 1 below, and other conditions were based on general conditions for producing a polyester yarn.

**[Table 1]**

| | Example 1 | Example 2 | Example 3 | Example 4 | Example 5 |
|---|---|---|---|---|---|
| Mole ratio of glycol/ dicarboxylic acid | 1.12 | 1.13 | 1.13 | 1.13 | 1.12 |
| Esterification temperature (°C) | 290 | 292 | 292 | 292 | 290 |
| Esterification time (Hr) | 3.9 | 4.0 | 4.0 | 3.9 | 4.0 |
| Polycondensation temperature (°C) | 305 | 300 | 298 | 295 | 290 |
| Polycondensation time(°C) | 4.0 | 3.8 | 4.0 | 3.8 | 3.8 |
| Vacuum degree of polycondensation (Torr) | 1 | 1 | 1 | 1 | 1 |
| Raw Chip IV(dl/ g) | 0.65 | 0.67 | 0.67 | 0.67 | 0.65 |
| Solid state polymerization temperature (°C) | 245 | 243 | 240 | 243 | 243 |
| Solid state polymerization time (Hr) | 24 | 25 | 25 | 24 | 25 |

(continued)

| | Example 1 | Example 2 | Example 3 | Example 4 | Example 5 |
|---|---|---|---|---|---|
| Vacuum degree of Solid state polymerization (Torr) | 1.0 | 0.8 | 0.7 | 1.0 | 0.8 |
| IV (dl/ g) after solid state polymerization | 1.3 | 1.32 | 1.35 | 1.38 | 1.41 |
| CEG of chip (meq/ kg) after solid state polymerization | 18 | 17 | 19 | 18 | 19 |
| Spinning temperature (°C) | 299 | 298 | 297 | 295 | 292 |
| Draw ratio | 5.4 | 5.5 | 5.5 | 5.4 | 5.3 |
| Heat treatment temperature (°C) | 230 | 235 | 240 | 240 | 245 |

The physical properties of the polyester yarns produced in Examples 1 to 5 were measured using the following method, and the measured physical properties thereof are given in Table 2 below.

1) Crystallinity

The density (p) of the polyester yarn was measured at 25 °C by a density gradient tube method using n-haptane and carbon tetrachloride, and the crystallinity was calculated by the following Calculation Formula 1 below:

[Calculation Formula 1]

$$X_c\,(\text{crystallinity}) = \frac{\rho_c(\rho - \rho_a)}{\rho(\rho_c - \rho_a)}$$

wherein $\rho$ is density of yarn, $\rho_c$ is density of crystal (in the case of PET, 1.457 g/ $cm^3$), and $\rho_a$ is density of noncrystal (in the case of PET, 1.336 g/ $cm^3$).

2) Intrinsic viscosity

An emulsion was extracted from a sample using carbon tetrachloride, the sample was melted by OCP (ortho-chloro phenol) at 160±2°C, and then the viscosity of the sample in a viscosity tube was measured at 25°C using an automatic viscometer (Skyvis-4000). The intrinsic viscosity (IV) of the polyester yarn was calculated by Calculation Formula 2 below:

[Calculation Formula 2]

$$\text{Intrinsic viscosity (IV)} = \{(0.0242 \times \text{Rel}) + 0.2634\} \times F$$

wherein Rel = (seconds of solution × specific gravity of solution × viscosity coefficient) / (OCP viscosity), and F= (IV of the standard chip) / (average of three IV measured from the standard chip with standard action).

3) CEG content

The CEG (carboxyl end group) content of the polyester yarn was measured according to ASTM D 664 and D 4094, in which 0.2 g of a sample was put into a 50 mL triangle flask, 20 mL of benzyl alcohol was added to the sample, the temperature was increased to 180 °C using a hot plate and then left for 5 minutes at the same temperature to completely dissolve the sample. Then, the solution was cooled to 160 °C, 5 ~ 6 drops of phenolphthalein were applied to the solution when the temperature reached 135 °C, and then the solution was titrated with 0.02 N KOH to change the colorless solution into the pink solution. At this titration point, the CEG content (-COOH, million equiv./ sample kg) was calculated by Calculation Formula 3 below:

[Calculation Formula 3]

$$CEG = (A-B) \times 20 \times 1/\ W$$

wherein A is the amount (mL) of KOH consumed in the titration of a sample, B is the amount (mL) of KOH consumed in a blank sample, and W is the weight (g) of a sample.

4) Modulus

According to the ASTM D 885 method (standard of the American Society for Testing and Materials), the modulus was obtained from the slope of the tangent line at a point on the curve corresponding to each strain in the stress-strain curve obtained by a tensile test at approximately 25 °C.

5) Tenacity and breaking elongation

The tenacity and breaking elongation of the polyester yarn were measured using a universal material testing machine (Instron) under conditions of a gauge length of 250 mm, a tension rate of 300 mm/ min and an initial load of 0.05 g/ d. A rubber faced grip was used for measurement.

6) Dry shirinkage rate

The dry shirinkage rate was measured at a temperature of 180 °C and an initial tension of 30 g for 2 minutes using a Testrite MK-V (manufactured by Testrite Corporation, England).

7) Toughness

The toughness ($10^{-1}$ g/ d) was calculated by Calculation Formula 4 below:

[Calculation Formula 4]

$$\text{Toughness} = \text{Strenegth(g/d)} \times \sqrt{\text{Elongation at Break(\%)}}$$

8) Single yarn fineness

The single yarn fineness was measured according to the method of picking the yarn of 9,000 m by using a reel, weighing the yarn to obtain the total fineness (denier) of the fiber, and dividing the total fineness by the number of filaments.

9) Elongation

Measurement was performed in the same manner as in the measurement of tenacity and the breaking elongation, and the elongation value corresponding to each load was identified in the S-S Curve.

**[Table 2]**

| | Example 1 | Example 2 | Example 3 | Example 4 | Example 5 |
|---|---|---|---|---|---|
| Crystallinity (%) | 45.4 | 45.1 | 44.6 | 44.4 | 44.2 |
| Intrinsic viscosity of yarn (dl/ g) | 1.01 | 1.02 | 1.05 | 1.07 | 1.10 |
| CEG of yarn (meq/ kg) | 26 | 25 | 25 | 22 | 20 |
| Tenacity (g/ d) | 9.0 | 9.2 | 9.2 | 9.2 | 9.4 |
| Breaking elongation (%) | 19 | 18 | 19 | 19 | 20 |
| Dry shirinkage rate (%) | 5.4 | 5.2 | 5.0 | 4.8 | 5.0 |

(continued)

| | | Example 1 | Example 2 | Example 3 | Example 4 | Example 5 |
|---|---|---|---|---|---|---|
| Single yarn fineness (de) | | 7.7 | 7.7 | 8.3 | 4.2 | 4.7 |
| Total fineness (de) | | 460 | 460 | 500 | 500 | 460 |
| Number of filament | | 60 | 60 | 60 | 120 | 120 |
| Modulus (g/ d) | 2%-3% elongation range | 26.2-24.3 | 25.8-23.9 | 25.5-23.5 | 25.2-23.3 | 24.8-22.3 |
| | 9%-11% elongation range | 49.0-69.0 | 49.0-66.9 | 49.5-67.5 | 50.2-68.3 | 51.3-69.3 |
| | 12%-14% elongation range | 77.5-71.0 | 68.1-74.1 | 68.5-74.5 | 69.5-75.5 | 70.1-76.5 |

Comparative Examples 1-5

Polyester yarns of Comparative Examples 1-5 were manufactured in the same manner as in Examples 1-5, except for the conditions given in Table 3 below.

**[Table 3]**

| | Comparati ve Example 1 | Comparati ve Example 2 | Comparati ve Example 3 | Comparati ve Example 4 | Comparati ve Example 5 |
|---|---|---|---|---|---|
| Mole ratio of glycol/ dicarboxylic acid | 1.12 | 1.12 | 1.13 | 1.13 | 1.12 |
| Esterification temperature (°C) | 290 | 292 | 292 | 292 | 290 |
| Esterification time (Hr) | 4.2 | 4.1 | 4.0 | 4.1 | 4.0 |
| Polycondensation temperature (°C) | 295 | 294 | 293 | 295 | 294 |
| Polycondensation time(°C) | 3.4 | 3.3 | 3.4 | 3.4 | 3.3 |
| Vacuum degree of polycondensation (Torr) | 1 | 1 | 1 | 1 | 1 |
| Raw Chip IV(dl/ g) | 0.65 | 0.67 | 0.67 | 0.67 | 0.65 |
| Solid state polymerization temperature (°C) | 235 | 235 | 237 | 235 | 237 |
| Solid state polymerization time (Hr) | 23 | 22 | 22 | 22 | 24 |
| Vacuum degree of Solid state polymerization (Torr) | 1.0 | 0.9 | 0.9 | 1.0 | 0.9 |
| IV (dl/ g) after solid state polymerization | 1.05 | 1.03 | 1.07 | 1.07 | 1.09 |
| CEG of chip (meq/ kg) after solid state polymerization | 22 | 24 | 25 | 25 | 26 |
| Spinning temperature (°C) | 302 | 304 | 306 | 307 | 310 |

(continued)

| | Comparati ve Example 1 | Comparati ve Example 2 | Comparati ve Example 3 | Comparati ve Example 4 | Comparati ve Example 5 |
|---|---|---|---|---|---|
| Draw ratio | 6.03 | 6.02 | 6.05 | 6.07 | 6.1 |
| Heat treatment temperature (°C) | 220 | 225 | 215 | 218 | 227 |

The physical properties of the polyester yarns produced in Comparative Examples 1-5 are summarized in Table 4 below. INVISTA's nylon fiber used for an airbag was used in Comparative Example 6 and physical properties thereof were described. With respect to the yarns of Example 1, Comparative Example 1 and Comparative Example 6, their modulus in each elongation range was measured and the results are shown in FIG. 3.

**[Table 4]**

| | | Comparative Example 1 | Comparative Example 2 | Comparative Example 3 | Comparative Example 4 | Comparative Example 5 | Comparative Example 6 |
|---|---|---|---|---|---|---|---|
| Crystallinity (%) | | 42.3 | 42.5 | 42.4 | 42.5 | 42.3 | |
| Intrinsic viscosity of yarn (dl/ g) | | 0.912 | 0.910 | 0.890 | 0.887 | 0.875 | |
| CEG of yarn (meq/ kg) | | 51 | 52 | 53 | 53 | 55 | |
| Tenacity (g/ d) | | 8.0 | 8.2 | 8.0 | 8.1 | 8.1 | 9.4 |
| Breaking elongation (%) | | 13.6 | 13.8 | 13.8 | 13.3 | 13.2 | 22.4 |
| Dry shirinkage rate (%) | | 12.1 | 12.3 | 12.5 | 12.5 | 12.7 | 6.5 |
| Single yarn fineness (de) | | 1.25 | 6.0 | 6.0 | 3.0 | 3.3 | 3.09 |
| Total fineness (de) | | 200 | 240 | 600 | 700 | 800 | 420 |
| Number of filament | | 160 | 40 | 50 | 230 | 240 | 136 |
| Modulus (g/ d) | 2%-3% elongation range | 77.2-84.3 | 75.8-84.9 | 76.5-85.5 | 78.8-87.3 | 79.8-88.3 | 20.3-19.2 |
| | 9%-11% elongation range | 32.5-21.0 | 22.6-32.9 | 23.5-33.5 | 24.3-34.3 | 25.3-35.3 | 71.0-80.3 |
| | 12%-14% elongation range | 0 | 21.0-0 | 21.5-0 | 22.5-0 | 23.2-0 | 71.0-47.5 |

As shown in Tables 2 and 4 and FIG. 3, the yarns of Examples 1 to 5 were found to satisfy the modulus ranges of the present invention, that is, the modulus of 60 g/ d or less in the elongation range of 2.0-3.0%, the modulus of 45-70 g/ d in the elongation range of 9.0-11.0%, and the modulus of 60 g/ d or more in the elongation range of 12.0-14%.

On the contrary, the yarns of Comparative Examples 1 to 5 were found not to satisfy the modulus ranges in the above elongation ranges because the heat treatment temperature of heat fixation and the draw ratio were not optimized. Further, the nylon fiber of Comparative Example 6 was found not to satisfy such modulus ranges.

Based on the different ranges of the physical properties, the yarns of Examples 1 to 5 had excellent mechanical properties such as tenacity or the like, and had high elongation to show excellent flexibility and folding property, compared to those of Comparative Examples 1 to 5. They also showed the physical properties equivalent to or better than those of the nylon fiber of Comparative Example 6.

## Claims

1. A polyester yarn for an airbag having a modulus of 60 g/ d or less in the elongation range of 2.0-3.0%, a modulus of 45-70 g/ d in the elongation range of 9.0-11.0%, and a modulus of 60 g/ d or more in the elongation range of 12.0-14%.

2. The polyester yarn for an airbag according to Claim 1, wherein the polyester yarn has a modulus of 10-40 g/ d in the elongation range of 2.0-3.0%, a modulus of 50-70 g/ d in the elongation range of 9.0-11.0%, and a modulus of 60-100 g/ d in the elongation range of 12.0-14%.

3. The polyester yarn for an airbag according to Claim 1, wherein the polyester yarn has an intrinsic viscosity of 0.8 dl/ g or more.

4. The polyester yarn for an airbag according to Claim 1, wherein the polyester yarn has a tenacity of 6.5 g/ d or more, and a breaking elongation of 13% or more.

5. The polyester yarn for an airbag according to Claim 1, wherein the polyester yarn has a dry shirinkage ratio range of 3-12% and toughness of $30 \times 10^{-1}$ g/ d or more.

6. The polyester yarn for an airbag according to Claim 1, wherein the polyester yarn has a total fineness from 200 to 1,000 denier.

7. The polyester yarn for an airbag according to Claim 1, wherein the polyester yarn has the number of filaments from 50 to 240.

8. A polyester fabric for an airbag, comprising the polyester yarn according to any one of Claims 1 to 7.

**FIG. 1**

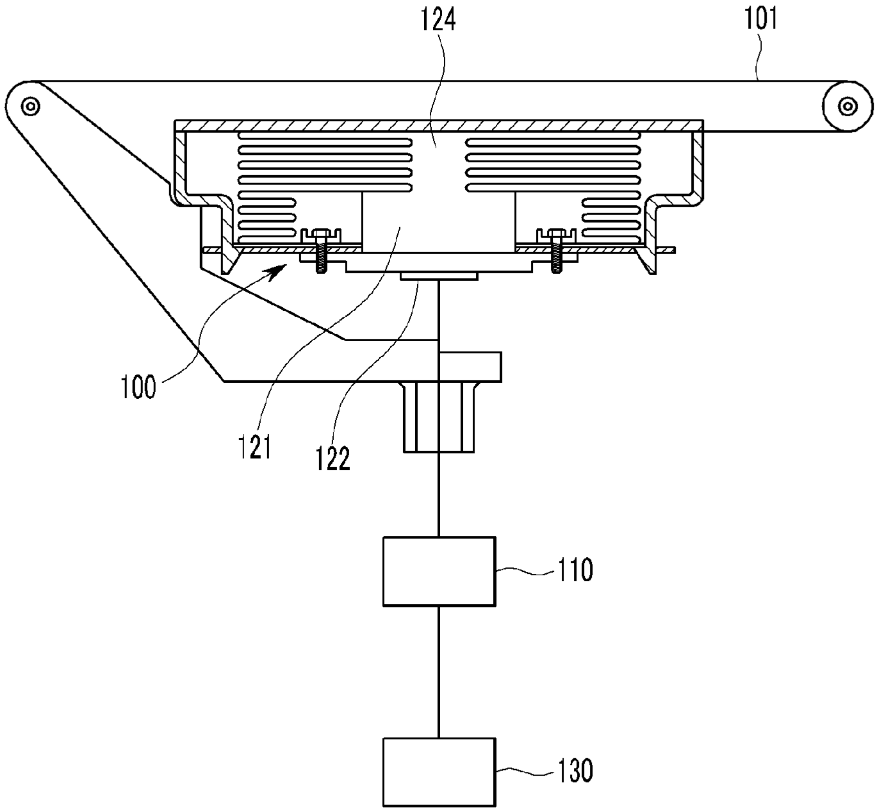

**FIG. 2**

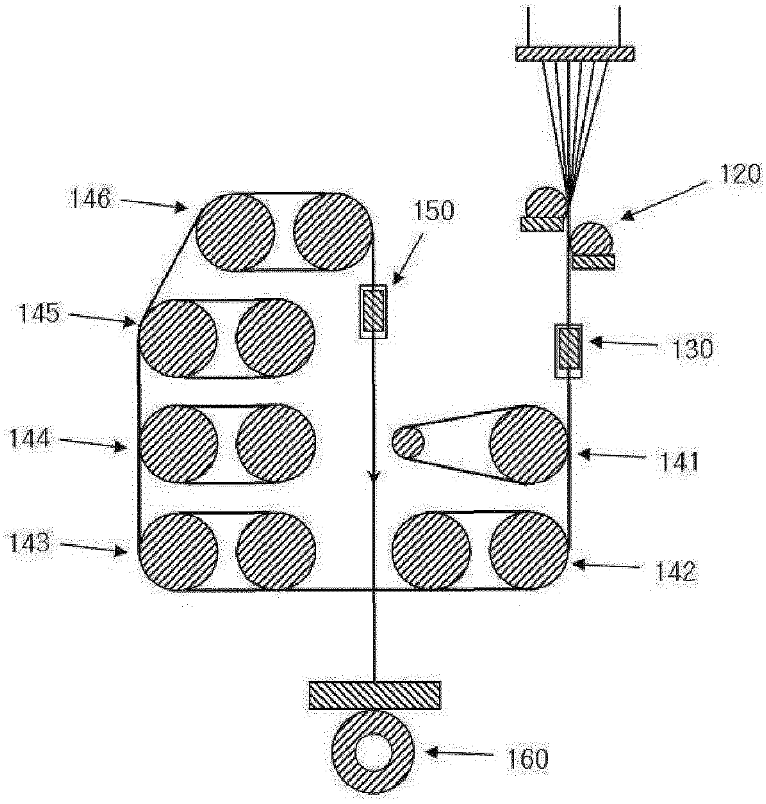

FIG. 3

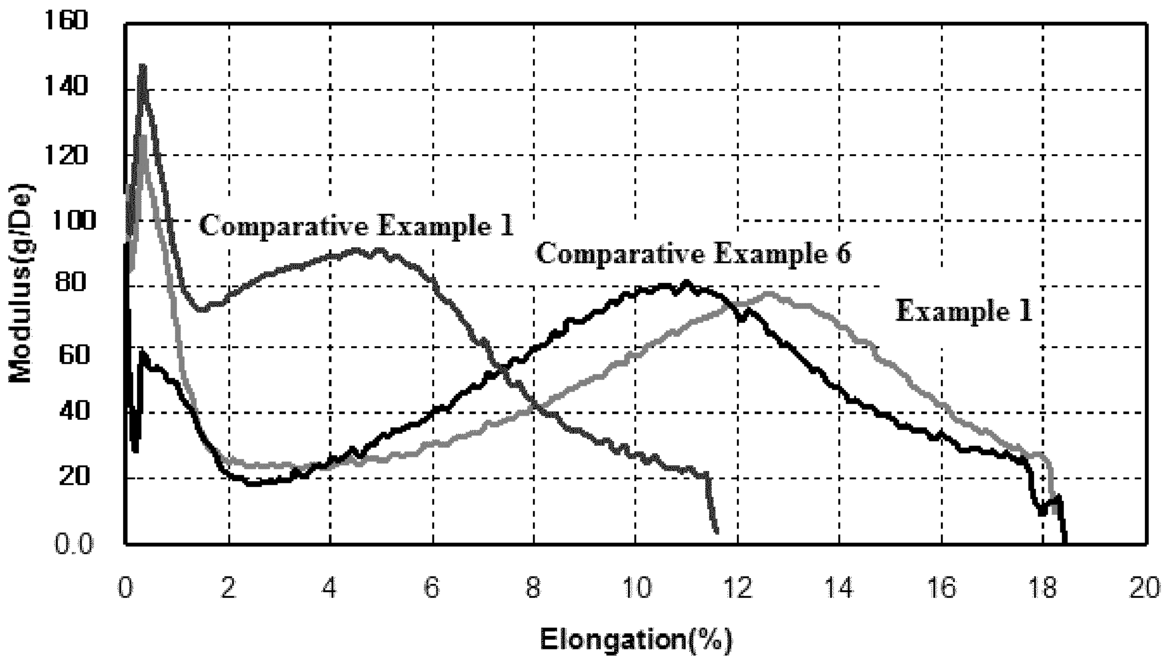
160
140
120
100
80
60
40
20
0.0
Modulus(g/De)
0
2
4
6
8
10
12
14
16
18
20
Elongation(%)
Comparative Example 1
Comparative Example 6
Example 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI04214437 B
- KR 20100117022